# EUROPÄISCHE PATENTSCHRIFT

(11) **EP 4 148 386 B1**
(45) Veröffentlichungstag und Bekanntmachung des Hinweises auf die Patenterteilung: **18.06.2025**
(21) Anmeldenummer: 22193907.7
(22) Anmeldetag: 05.09.2022
(51) Int. Cl.: G01C 21/16, G01C 21/30, G01C 21/36

(54) **ERMITTLUNG EINER ABSOLUTEN INITIALPOSITION EINES FAHRZEUGS**
DETERMINATION OF AN ABSOLUTE INITIAL POSITION OF A VEHICLE
DÉTERMINATION D'UNE POSITION INITIALE ABSOLUE D'UN VÉHICULE

(30) Priorität: 10.09.2021 DE 102021123503
(43) Veröffentlichungstag der Anmeldung: 15.03.2023
(73) Patentinhaber: VOLKSWAGEN AKTIENGESELLSCHAFT, 38440 Wolfsburg (DE); CARIAD SE, 38440 Wolfsburg (DE)
(72) Erfinder: KUBE, Roland, 38179 Schwülper (DE); IKEN, Timo, 38440 Wolfsburg (DE); LAST, Carolin, 38102 Braunschweig (DE); WAPPLER, Stefan, 10717 Berlin (DE); HOLICKI, Michael, 13505 Berlin (DE); HÄNSEL, Ralph, 12437 Berlin (DE)
(74) Vertreter: Hofstetter, Schurack & Partner

(56) Entgegenhaltungen:
- WO-A2-2016/130719

## Beschreibung

Die vorliegende Erfindung betrifft ein Verfahren zum Ermitteln einer absoluten Initialposition eines Fahrzeugs. Darüber hinaus betrifft die vorliegende Erfindung eine entsprechende Vorrichtung, mit der die absolute Initialposition des Fahrzeugs ermittelbar ist. Ferner betrifft die vorliegende Erfindung ein entsprechendes Fahrzeug.

Für die Navigation von Fahrzeugen ist es wichtig, dass die Eigenposition des Fahrzeugs bekannt ist. Insbesondere ist die Kenntnis der Eigenposition für autonom oder teilautonom fahrende Fahrzeuge von essentieller Bedeutung. Die absolute Eigenposition kann zumindest grob durch globale Positioniersysteme ermittelt werden. Für das autonome Fahren sind derart grobe Positionierungen jedoch vielfach nicht ausreichend. Darüber hinaus stehen in Parkhäusern globale Positioniersysteme in der Regel nicht zur Verfügung. Daher ist es notwendig, in solchen Situationen auf Kamera basierte oder andere relative Lokalisierungen zurückzugreifen.

Viele Verfahren für die kamerabasierte Lokalisierung eines Fahrzeugs mit Landmarken benötigen zunächst eine initiale Position und Ausrichtung des Fahrzeugs, um in der weiteren Bildfolge ein Tracking mit einer Verbesserung der Eigenpositionsschätzung durchzuführen. Ein Hilfsmittel hierfür sind Landmarken, deren Detektionen sich eindeutig mit Objekten einer Karte identifizieren lassen. Ein Beispiel hierfür sind sogenannte AR-Marker (augmented reality), aber auch andere nicht verwechselbare Objekte wie etwa Nummern von Parkbuchten. Generelles Ziel ist es, einige derartige Objekte zu identifizieren und durch Abgleich mit der Karte eine initiale Pose bzw. Position zu berechnen.

Zur globalen Lokalisierung aufgrund von Landmarken gibt es verschiedene in der Technik verwendete Verfahren. Ein solches bekanntes Verfahren basiert auf AR-Markern. Aus der Detektion der vier Ecken des AR-Markers im Bild und deren Abgleich mit den vier Ecken des gleichen Markers in der 3D-Karte kann mittels eines klassischen PnP (Perspective-n-Point) Verfahrens eine initiale Pose bestimmt werden. Dies wird etwa in der öffentlich zugängigen OpenCV Aruco Library gemacht. Diese Verfahren sind besonders bei weit entfernten Markern relativ ungenau und erfordern nicht nur eine Kenntnis der Position des Markers in der 3D-Karte, sondern auch seine genaue Orientierung und Ausmaße. Für Objekte, bei denen keine präzisen Konturen extrahiert werden können, sind sie nicht geeignet.

Das genannte PnP-Verfahren basiert auf einem n-Punkt-Pose-Problem, entsprechend dem die Pose einer kalibrierten Kamera anhand einer Menge von n 3D-Punkten in der Welt und ihre entsprechenden 2D-Projektionen im Bild geschätzt werden sollen. Die Kameraposition weist in der Regel 6 Freiheitsgrade auf, die sich aus den drei Rotationen und den drei Translationen der Kamera in Bezug auf die Welt zusammensetzen. Für das klassische PnP-Verfahren werden mehrere (mindestens 3) Objekte in einem einzelnen Kamerabild extrahiert und mit der Karte abgeglichen. Daraus kann dann die Pose bestimmt werden. Der Nachteil hierbei ist, dass dafür drei Objekte gleichzeitig sichtbar sein müssen, was eine starke Einschränkung an die Geometrie der Landmarken darstellt. Außerdem kann dieses Verfahren nicht auf Multikamerasysteme (etwa Surround-View-Systeme) verallgemeinert werden, da sich die Sichtstrahlen der Detektionen in einem Punkt treffen müssen.

Ein solches P3P-Verfahren ist beispielsweise beschrieben in: Nistér, David & Stewénius, Henrik, (2007), "A Minimal Solution to the generalised 3-Point Pose Problem", Journal of Mathematical Imaging and Vision; 27; Seiten 67 bis 79.

Ein sog. generalisiertes PnP-Verfahren ist beschrieben in: Camposeco et. al "Minimal Solvers for Generalized Pose and Scale Estimation from Two Rays and One Point", ECCV 2016. Bei diesem generalisierten PnP-Verfahren schneiden sich die Sichtstrahlen nicht.

Entsprechend wird in Nishimura et al. "A linear Generalized Camera Calibration from Three Intersecting Reference Planes", ICCV 2015 eine sog. "generalisierte Kamera" vorgestellt, bei der auch sich nicht schneidende Sichtstrahlen erzeugt werden. Das Konzept hierzu wurde bereits in Grossberg, Nayar, "The Raxel Imaging Model and Ray Based Calibration", International Journal of Computer Vision 61(2) 2005 eingeführt.

Ein weiterer Ansatz zur Lokalisierung aufgrund von Landmarken besteht darin, mit dem Fahrzeug eine gewisse Distanz zurückzulegen und dabei eine 3D-Rekonstruktion der extrahierten Objekte im Fahrzeugkoordinatensystem durchzuführen. Die so entstandene 3D-Karte kann mit der externen Karte über ein 3D-3D-matching-Verfahren abgeglichen werden, um so die Position des Fahrzeugs zu bestimmen. Der Nachteil hierbei ist, dass dazu eine 3D-Rekonstruktion mit hinreichender Genauigkeit durchgeführt werden muss, was wiederum erfordert, dass die Objekte über längere Zeit getrackt werden müssen. Insbesondere kann man Einzeldetektionen von Objekten nicht verwenden.

Aus der Druckschrift US 10 21 55 71 B2 ist ein Verfahren zur Lokalisierung und Kartierung bekannt, das die Aufnahme eines Bildes mit einer an einem Fahrzeug angebrachten Kamera umfasst. Dem Fahrzeug ist ein globaler Systemstandort zugeordnet. Eine in dem Bild dargestellte Landmarke wird mit einem Landmarken-Identifikationsmodul des Fahrzeugs identifiziert. Die identifizierte Landmarke weist einen geographischen Standort und einen bekannten Parameter auf. Mit einem Merkmalsextraktionsmodul wird ein Satz von Landmarkenparametern aus dem Bild extrahiert. Eine relative Position zwischen dem Fahrzeug und dem geografischen Ort der Landmarke wird basierend auf einem Vergleich zwischen dem extrahierten Satz von Landmarkenparametern und dem bekannten Parameter bestimmt. Der globale Systemstandort wird auf der Grundlage der relativen Position aktualisiert.

Weiterhin offenbart die Druckschrift US 9 488 483 B2 ein System zur Erstellung einer Klassifizierungsvorlage für Straßenmarkierungen und zur Fahrzeuglokalisierung anhand von solchen Straßenmarkierungen. Eine Datenbank mit Schablonen zur Klassifizierung von Straßenmarkierungen enthält Schablonen von Trainingsbildern, die aus verschiedenen Navigationsumgebungen stammen. Ein Trainingsbild mit einer Straßenmarkierung kann entzerrt und verbessert werden. Anhand des entzerrten oder verbesserten Bilds können die Ecken der Straßenmarkierung berechnet werden. Für die Ecken können Positionen bestimmt und als Teil einer Vorlage gespeichert werden. Darüber hinaus können die Ecken für ein Laufzeitbild berechnet und mit den Ecken von Vorlagen aus der Vorlagendatenbank abgeglichen werden. Anhand des Abgleichs kann der Standort oder die Position eines Fahrzeugs bestimmt werden. Auf diese Weise wird eine Fahrzeuglokalisierung ermöglicht, bei der Drift oder andere Probleme des GPS (z. B. Verdeckung) abgemildert werden.

Dokument WO 2016/130719 A2 beschreibt die Verwendung einer groben Karte zum Navigieren eines autonomen Fahrzeugs. Die Positionen von Landmarken relativ zu einem Fahrzeug können bestimmt werden. Außerdem kann eine aktuelle Position eines Fahrzeugs auf der Basis von Schnittpunkten von Richtungsvektoren ermittelt werden.

Die Aufgabe der vorliegenden Erfindung besteht darin, eine Initialposition eines Fahrzeugs zuverlässig bestimmen zu können.

Erfindungsgemäß wird diese Aufgabe durch ein Verfahren und eine Vorrichtung gemäß den unabhängigen Ansprüchen gelöst. Vorteilhafte Weiterbildungen der Erfindung ergeben sich aus den Unteransprüchen.

Erfindungsgemäß wird demnach ein Verfahren zum Ermitteln einer absoluten Initialposition eines Fahrzeugs bereitgestellt. Die Initialposition ist beispielsweise die Position zu Beginn einer Trajektorie oder einer beliebigen Bewegung des Fahrzeugs und dient als Grundlage zur Berechnung der Eigenposition des Fahrzeugs zu anderen Zeitpunkten.

Zunächst erfolgt hierzu ein Bewegen des Fahrzeugs ausgehend von der absoluten Initialposition entlang einer Trajektorie. Dies bedeutet, dass das Fahrzeug beispielsweise eine bestimmte Strecke gefahren wird und diese Fahrstrecke der Trajektorie entspricht. Der Ausgangspunkt der Fahrstrecke beziehungsweise Trajektorie ist die absolute Initialposition. Allerdings kennt das Fahrzeug beziehungsweise der Nutzer diese absolute Initialposition, insbesondere ihre Koordinaten noch nicht. Um diese absolute Initialposition zu ermitteln, erfolgt ein Erfassen der Trajektorie durch Relativnavigation ausgehend von einer relativen Initialposition. Beispielsweise wird die relative Initialposition dadurch festgelegt, dass ihre Koordinaten auf 0 gesetzt werden oder auf einen anderen vorgegebenen Wert. Die Trajektorie, die sich aus dem Bewegen des Fahrzeugs ergibt, wird durch sogenannte Relativnavigation mittels geeigneter Sensorik vorzugsweise des Fahrzeugs erfasst. Dabei wird die relative Initialposition als Anfangspunkt der Trajektorie gesetzt.

In einem weiteren Schritt des erfindungsgemäßen Verfahrens erfolgt ein Erfassen der Trajektorie durch Odometrie ausgehend von einer definierten Initialposition, die der absoluten Initialposition zugeordnet ist. Da die absolute Initialposition noch nicht bekannt ist, wird der Anfangspunkt der Trajektorie als Initialposition definiert, indem dieser Initialposition beispielsweise die Koordinaten 0/0 zugewiesen werden. Die definierte Initialposition kann grundsätzlich beliebige Koordinaten beinhalten. Die so definierten Koordinaten bilden die definierte Initialposition, an der die Odometrie starten kann. Das Bewegen des Fahrzeugs wird durch die Odometrie aufgezeichnet. Durch die Odometrie kann die Position und gegebenenfalls auch die Orientierung eines mobilen Systems durch dieses selbst geschätzt werden. Schließlich kann aus dieser Schätzung eine Trajektorie gewonnen werden, die an der definierten Initialposition startet.

Sodann erfolgt ein Detektieren von (mindestens) drei Objekten von dem Fahrzeug aus, das sich auf der Trajektorie befindet, wobei bei jedem Detektieren ein Detektionsstrahl erfasst wird. Die Objekte werden berührungslos detektiert. Dabei werden beispielsweise Bilder aus der Umgebung des Fahrzeugs gewonnen und vorbestimmte Objekte in den Bildern identifiziert. Von den detektierten Objekten werden die Detektionsrichtungen beispielsweise in Bezug auf das Fahrzeug beziehungsweise die Trajektorie erfasst. Damit ergibt sich für jedes detektierte Objekt ein Detektionsstrahl, der von der aktuellen Position des Fahrzeugs (Detektionsposition) bzw. der Detektionseinrichtung auf der Trajektorie ausgeht und in Richtung des detektierten Objekts weist. Es können auch mehr als drei Objekte detektiert und für die weitere Auswertung mit ihren jeweiligen Detektionsstrahlen genutzt werden. Die mindestens drei Objekte werden von mindestens zwei verschiedenen Stellen der Trajektorie aus erfasst. Dies führt dazu, dass sich die Detektionsstrahlen für die mindestens drei Objekte zumindest nicht alle schneiden. Des Weiteren bedeutet dies, dass die Trajektorie und insbesondere auch die Detektionsstrahlen nicht alle gleichzeitig erfasst werden. Vielmehr entsteht ein virtuelles Gebilde aus der Trajektorie und den Detektionsstrahlen aus den zeitlich versetzten Aufnahmen beziehungsweise Erfassungen.

Weiterhin erfolgt ein Abgleichen der erfassten Trajektorie einschließlich der erfassten Detektionsstrahlen (virtuelles Gebilde) mit einer digitalen Karte, in der die drei Objekte mit ihren jeweiligen absoluten Positionen repräsentiert sind, zur Ermittlung einer Lage der definierten Initialposition relativ zu den Objekten. Da die absoluten Positionen der mindestens drei Objekte aus der digitalen Karte bekannt sind, und ebenso der relative Bezug zwischen den Objekten und der definierten Initialposition bekannt ist, kann aus diesen Daten der definierten Initialposition die absolute Initialposition zugeordnet werden. Somit lässt sich die absolute Initialposition des Fahrzeugs, das sich auf der Trajektorie bewegt, schätzen.

Bei einer vorteilhaften Ausgestaltung des erfindungsgemäßen Verfahrens wird zu der absoluten Initialposition des Fahrzeugs auch eine dazugehörige Ausrichtung aus dem Abgleichen gewonnen. Dazu werden selbstverständlich auch die Posen bei der Erfassung der Trajektorie mit erfasst. Gleichzeitig mit der absoluten Initialposition kann damit auch die Orientierung des Fahrzeugs in der Initialposition, d.h. die Initialpose, ermittelt werden. Damit lässt sich die absolute Pose des Fahrzeugs am Beginn der Trajektorie gewinnen.

In entsprechenden Ausführungsbeispielen handelt es sich bei der Odometrie um eine optische Odometrie, eine Radarodometrie oder eine Radodometrie. Bei der optischen Odometrie wird der Fluss von Objekten in Bildern ermittelt. Aus diesem Fluss der Objekte lassen sich Rückschlüsse auf die Eigenbewegung gewinnen. Bei entsprechend ausreichender Anzahl an sich im Fluss befindlichen Objekten können die Position und Orientierung des Fahrzeugs geschätzt werden. In ähnlicher Weise kann die Odometrie anstelle von Licht auch auf Radar basiert sein. Auch hier kann der Fluss von Objekten in Radarbildern überwacht und daraus auf Position und Orientierung des Fahrzeugs geschlossen werden. Am meisten verbreitet ist jedoch die sogenannte Radodometrie, bei der anhand der Daten des Vortriebssystems des Fahrzeugs die Position und Orientierung des Fahrzeugs geschätzt werden können. Dabei werden beispielsweise die Radumdrehungen und die Lenkeinschläge für das Schätzen berücksichtigt.

Bei einer Ausführungsform des Verfahrens zum Ermitteln der absoluten Initialposition des Fahrzeugs wird mindestens eines der Objekte mehrfach detektiert. Wenn eines der mindestens drei Objekte mehrfach detektiert wird, entstehen für das betreffende Objekt entsprechend mehrere Detektionsstrahlen. Diese erhöhte Anzahl an Detektionsstrahlen erhöht die Genauigkeit beim Ermitteln der absoluten Initialposition. Gegebenenfalls kann auch ein Schnittpunkt von Detektionsstrahlen, mit denen alle ein gemeinsames Objekt detektiert wurde, beim Abgleichen mit der digitalen Karte genutzt werden. Insbesondere sollte sich, von Detektionsfehlern abgesehen, das jeweilige Objekt auf dem Schnittpunkt befinden. Beim Abgleichen kann man sich entsprechende Optimierungsalgorithmen zu Hilfe nehmen.

Wie oben bereits angedeutet wurde, kann das Detektieren der drei Objekte durch optische Detektion, Radardetektion und/oder Ultraschalldetektion erfolgen. Die optische Detektion kann vorzugsweise durch eine oder mehrere Kameras erfolgen. Der Detektion kann eine entsprechende Bildauswertung zugrundegelegt werden. Ähnliches gilt für die Radardetektion und die Ultraschalldetektion. Auch hier können entsprechende Radarbilder beziehungsweise Ultraschallbilder der Umgebung des Fahrzeugs gewonnen werden, um darin durch geeignete Bildauswertung vorbestimmte Objekte beziehungsweise Objekttypen zu ermitteln.

Bei dem erfindungsgemäßen Verfahren beinhaltet das Abgleichen ein generalisiertes PnP-Verfahren und insbesondere ein generalisiertes P3P-Verfahren. Das PnP-Verfahren (Perspective-n-Point) ist ein Problem zur Schätzung der Pose einer kalibrierten Kamera bei einer Menge von n 3D-Punkten in der Welt und ihren entsprechenden 2D-Projektionen im Bild. Die Kamerapose besitzt sechs Freiheitsgrade betreffend die verschiedenen Rotationen und Translationen. Speziell bei drei Objekten, wenn also n = 3 ist, kann das allgemein bekannte P3P-Verfahren genutzt werden, das als Open Source Software verfügbar ist. Bei dem "generalisierten PnP-Verfahren" schneiden sich die Detektionsstrahlen beziehungsweise Sichtstrahlen nicht, zumindest nicht alle. Die Detektionsstrahlen werden also beispielsweise von mehreren Kameras eines Multi-Kamera-Systems ("generalisierte Kamera") aufgenommen. Im vorliegenden Fall werden die Detektionsstrahlen in der Regel zeitlich hintereinander von verschiedenen Orten auf der Trajektorie aus aufgenommen, weswegen von einer "virtuellen generalisierten Kamera" gesprochen werden kann.

In einer speziellen Ausgestaltung des Verfahrens ist vorgesehen, dass die Detektionsstrahlen sowie die Trajektorie im dreidimensionalen Raum erfasst werden. Somit kann eine entsprechende 3D-Information bezüglich der absoluten Initialposition beziehungsweise Initialpose gewonnen werden. Damit lassen sich entsprechende räumliche Informationen bezüglich der Initialposition beziehungsweise Initialpose ermitteln.

Speziell kann im Rahmen der Erfindung ein Verfahren zum Ermitteln einer Eigenposition eines Fahrzeugs durch Ermitteln einer absoluten Initialposition des Fahrzeugs auf die oben beschriebene Weise und Gewinnen der Eigenposition ausgehend von der Initialposition durch Odometrie und/oder durch kamerabasierte Lokalisierung bereitgestellt werden. Es wird also die ermittelte absolute Initialposition hier in dem Fahrzeug selbst genutzt, um die Eigenposition beziehungsweise Eigenpose insbesondere absolut feststellen zu können. Eine derartige Bestimmung der Eigenposition beziehungsweise Eigenpose ist beim autonomen beziehungsweise teilautonomen Betrieb von Fahrzeugen von herausragender Bedeutung. Besonders in Parkhäusern kann diese Art der Bestimmung der Eigenposition beziehungsweise Eigenpose von Vorteil sein, da dort oftmals auf andere Systeme nicht zurückgegriffen werden kann.

Die oben genannte Aufgabe wird erfindungsgemäß auch gelöst durch eine Vorrichtung zum Ermitteln einer absoluten Initialposition eines Fahrzeugs, aufweisend
- eine Erfassungseinrichtung zum Erfassen einer Trajektorie durch Odometrie ausgehend von einer definierten Initialposition, wobei die Erfassungseinrichtung ausgehend von der absoluten Initialposition entlang der Trajektorie bewegbar ist,
- eine Detektionseinrichtung zum Detektieren von drei Objekten von der Detektionseinrichtung aus, die sich auf der Trajektorie befindet, wobei bei jedem Detektieren ein Detektionsstrahl erfasst wird,
- eine Abgleichseinrichtung zum Abgleichen der erfassten Trajektorie einschließlich der erfassten Detektionsstrahlen mit einer digitalen Karte, in der die drei Objekte mit ihren jeweiligen absoluten Positionen repräsentiert sind, zur Ermittlung einer Lage der definierten Initialposition relativ zu den Objekten, ), wobei das Abgleichen ein generalisiertes PnP-Verfahren beinhaltet, bei dem sich die Detektionsstrahlen nicht schneiden, und
- einer Ermittlungseinrichtung zum Ermitteln der absoluten Initialposition basierend auf der Lage der definierten Initialposition relativ zu den Objekten.

Des Weiteren wird erfindungsgemäß auch ein Fahrzeug mit einer derartigen Vorrichtung zum Ermitteln der absoluten Initialposition beziehungsweise Eigenposition bereitgestellt.

Zu der Erfindung gehören auch Weiterbildungen der erfindungsgemäßen Vorrichtung bzw. des erfindungsgemäßen Fahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der erfindungsgemäßen Vorrichtung bzw. des erfindungsgemäßen Fahrzeugs hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: ein schematisches Blockdiagramm eines Ausführungsbeispiels eines erfindungsgemäßen Verfahrens;
- Fig. 2: eine Trajektorie mit Detektionsstrahlen;
- Fig. 3: Objekte in einer digitalen Karte;
- Fig. 4: einen Abgleich der Trajektorie von Fig. 2 mit der digitalen Karte von Fig. 3; und
- Fig. 5: eine schematische Darstellung eines Fahrzeugs mit einer beispielhaften Vorrichtung zur Ermittlung einer Initialposition.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

Die Position und gegebenenfalls die Ausrichtung eines Fahrzeugs soll durch die Extraktion beispielsweise aus einem Kamerabild und deren Abgleich mit einer Karte der Umgebung geschätzt werden. Vorzugsweise wird mit dieser geschätzten Position (und optional Ausrichtung) eine nachgelagerte landmarkenbasierte Lokalisierung initialisiert.

In dem nachfolgend geschilderten Ausführungsbeispiel werden drei Technologien kombiniert, um die initiale Lokalisierung eines mit einer Kamera ausgestatteten Fahrzeugs mit Hilfe einer externen 3D-Karte zu ermöglichen. Die erste Technologie ist die Extraktion von Objekten aus dem Kamerabild, die eindeutig mit Objekten aus der Karte identifiziert werden können (z.B. AR-Marker; Augmented Reality). Für die Extraktion der Objekte muss der Typ dieser Objekte vorgegeben sein. Als zweite Technologie, die mit der ersten Technologie kombiniert werden soll, dient ein Verfahren zur "Relativnavigation" (d.h. Odometrie) des Fahrzeugs über einen Streckenabschnitt, der lange genug ist, um mindestens drei verschiedene Objekte in den Kameradaten (allgemein Bilddaten) zu extrahieren. Die Relativnavigation kann dabei durch Fahrzeug-Odometrie (d.h. Radodometrie), durch ein kamerabasiertes Verfahren beziehungsweise eine optische Odometrie (z.B. SLAM; Simultaneous Localisation and Mapping), durch Radarodometrie oder durch eine Kombination davon erfolgen. Als dritte Technologie wird mit den beiden oben genannten Technologien ein generalisiertes Verfahren zur Lösung eines Drei-Punkte-Pose-Problems (auch unter dem Begriff "Perspective-3-Point" beziehungsweise allgemeiner "Perspective-n-Point" bekannt) kombiniert, welches die Positionierung einer verallgemeinerten bzw. generalisierten Kamera mit mindestens drei Sichtungen von bekannten Objekten beziehungsweise Landmarken ermöglicht. Ein solches PnP-Verfahren ist beispielsweise in der oben genannten Veröffentlichung von Nistér et al. beschrieben.

In dieser Kombination von Technologien ist es möglich, die gesamte aufgenommene Trajektorie mit ihren zeitlich unterschiedlichen Sichtungen als Produkt einer einzelnen "virtuellen generalisierten Kamera" zu betrachten und das "generalisierte PnP-Verfahren" zu benutzen, um eine Lokalisierung durchzuführen.

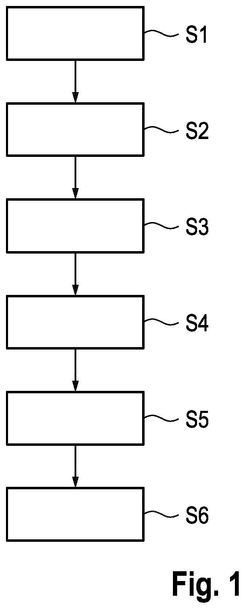

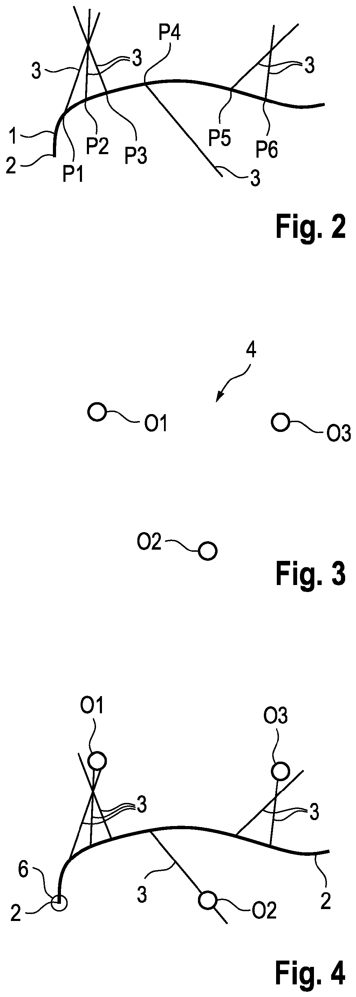

In Fig. 1 sind die einzelnen Verfahrensschritte schematisch als Blockdiagramm wiedergegeben, um die absolute Initialposition eines Fahrzeugs beziehungsweise seine Eigenposition zu ermitteln. In einem ersten Schritt S1 wird das Fahrzeug ausgehend von der absoluten Initialposition (deren Koordinaten am Anfang nicht bekannt sind) entlang einer Trajektorie 1 (vergleiche Fig. 2) bewegt. In einem zweiten Verfahrensschritt S2, der üblicherweise mit dem ersten Verfahrensschritt S1 gleichzeitig verläuft, erfolgt ein Erfassen der Trajektorie 1 durch Odometrie ausgehend von einer definierten Initialposition 2 beziehungsweise Initialpose. Diese definierte Initialpose beziehungsweise Initialposition 2 entspricht der Anfangspose beziehungsweise -position beispielsweise im System des Fahrzeugs als Start für die Bewegung entlang der Trajektorie. Das Fahrzeug bewegt sich also und nimmt Bilder von seiner Umgebung z.B. mit der Kamera auf (Akkumulationsphase).

Anschließend werden in einem Schritt S3 mindestens drei Objekte von dem Fahrzeug aus detektiert, welches sich auf der Trajektorie befindet beziehungsweise bewegt. Dabei wird bei jedem Detektieren eines Objekts (in der Regel von unterschiedlichen Stellen beziehungsweise Punkten der Trajektorie) jeweils ein Detektionsstrahl erfasst, welcher einen Anfangspunkt (aktuelle Position des Fahrzeugs) und eine Richtung sowie gegebenenfalls einen Endpunkt aufweist. Aus den Bildern werden also Objekte vorbekannten Typs extrahiert. Die Akkumulationsphase dauert solange, bis hinreichend viele "Sichtungen" von hinreichend vielen unterschiedlichen Objekten vorhanden sind.

Im Beispiel von Fig. 2 wird ein erstes Objekt an den Punkten P1, P2 und P3 der Trajektorie 1 gesichtet. Von jedem Punkt P1 bis P3 wird ein jeweiliger Sicht- beziehungsweise Detektionsstrahl 3 ermittelt. Ein solcher Detektionsstrahl 3 ist definiert durch seinen Anfangspunkt P1, P2, P3 und gegebenenfalls einschließlich der jeweiligen Orientierungen in Bezug auf die Initialposition 2 beziehungsweise die Initialpose. Außerdem sind die jeweiligen Detektionsstrahlen 3 zumindest durch ihre Richtungen und gegebenenfalls auch durch Endpunkte definiert.

Im Laufe der Trajektorie gelangt das Fahrzeug zu einem Punkt P4, an dem es ein zweites Objekt mit einem Detektionsstrahl 3 detektiert. Auf der weiteren Fahrt gelangt das Fahrzeug an die Punkte P5 und P6 auf der Trajektorie 2. Von dort aus detektiert das Fahrzeug ein drittes Objekt mit jeweiligen Detektionsstrahlen 3. An sämtlichen Punkten der Trajektorie, an denen eine Sichtung beziehungsweise Detektion eines Objekts erfolgt, wird vorzugsweise nicht nur die Position, sondern die Pose des Fahrzeugs registriert.

Fig. 3 gibt symbolisch eine digitale Karte 4 wieder. In ihr sind drei Objekte O1, O2 und O3 markiert. Diese Objekte O1 bis O3 entsprechen vorgegebenen Objekttypen, die von dem Fahrzeug detektierbar sind. Im vorliegenden Beispiel wird das Objekt O1 von dem Fahrzeug an den Punkten P1 bis P3 detektiert beziehungsweise gesichtet. Das zweite Objekt O2 wird nur einmal an dem Punkt P4 der Trajektorie 2 detektiert. Das Objekt O3 wird zweimal an den Punkten P5 und P6 auf der Trajektorie 2 detektiert.

In einem weiteren Schritt S4 wird die erfasste Trajektorie 2 einschließlich der Detektionsstrahlen 3 mit der digitalen Karte 4 abgeglichen. Die digitale Karte 4 enthält die jeweiligen absoluten Positionen der Objekte O1 bis O3. Natürlich kann die digitale Karte auch weitere Objekte und deren absolute Positionen enthalten. Der Abgleich erfolgt entsprechend der Skizze von Fig. 4. Dies bedeutet, dass die Trajektorie 2 mit ihren Detektionsstrahlen 3 gemäß Fig. 2 so positioniert und ausgerichtet wird, dass die jeweiligen Detektionsstrahlen 3 mit den dazugehörigen Objekten O1 bis O3 (z.B. Landmarken) korrelieren. Im vorliegenden Beispiel verlaufen die Detektionsstrahlen 3 durch die Objekte O1 bis O3. Für den Abgleich kann ein Optimierungsverfahren etwa auf der Basis des kleinsten quadratischen Fehlers genutzt werden. Es können auch andere sogenannte Map-Matching-Verfahren hierfür eingesetzt werden.

Mittels der Relativnavigation beziehungsweise den oben genannten Odometrieverfahren kann die Pose des Fahrzeugs relativ zum Beginn der Trajektorie, d.h. der definierten Initialposition 2, verortet werden. Jede Sichtung entspricht einem Sichtstrahl beziehungsweise Detektionsstrahl vorzugsweise im dreidimensionalen Raum, wobei der Detektionsstrahl 3 durch das optische Zentrum beispielsweise der Kamera zum Zeitpunkt der Sichtung verläuft.

Falls ein Objekt mehrfach gesichtet wird, kann aus den mehreren Sichtungen beziehungsweise Detektionsstrahlen 3 ein gemittelter Strahl ermittelt werden. Im Beispiel von Fig. 4 könnte bezüglich des Objekts O1 beispielsweise ein Strahl aus drei Detektionsstrahlen 3 gemittelt werden. Ein Strahl bezüglich des Objekts O3 könnte aus zwei Detektionsstrahlen 3 gemittelt werden, da das Objekt 3 zweimal detektiert wurde. Durch die Relativnavigation beziehungsweise die Odometrie kann somit jeder Detektionsstrahl 3 ggf. in einem 3D-System auf die Trajektorie bezogen werden. Es entsteht ein System von (3D-) Detektionsstrahlen 3 (ohne gemeinsamen Anfangspunkt) und zugehörigen 3D-Punkten aus der externen beziehungsweise digitalen Karte 4. Mit dem generalisierten PnP-Verfahren kann die relative Fahrzeugtrajektorie zur externen Karte registriert werden und damit die gewünschte absolute Initialpose bzw. Initialposition des Fahrzeugs bestimmt werden (Schritt S5).

Schließlich kann in einem weiteren Schritt S6 die Eigenposition des Fahrzeugs auf der Basis der wie oben ermittelten absoluten Initialpose des Fahrzeugs ermittelt werden. Dabei kann die Eigenposition ausgehend von der Initialposition durch Odometrie und/oder durch kamerabasierte Lokalisierung gewonnen werden.

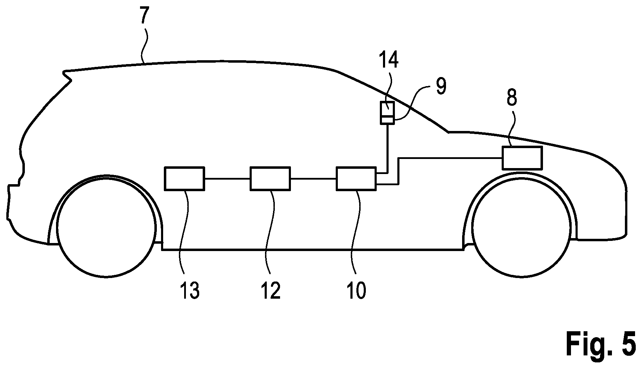

Fig. 5 zeigt schematisch ein Fahrzeug 7, das in der Lage ist, eine absolute Initialposition beziehungsweise Initialpose und gegebenenfalls auch eine aktuelle Eigenposition anhand des oben beschriebenen Verfahrens zu ermitteln. Dazu besitzt das Fahrzeug eine Vorrichtung mit den nachfolgend erläuterten Einrichtungen 8 bis 13. Eine Erfassungseinrichtung 8 der Vorrichtung beziehungsweise des Fahrzeugs 7 dient zum Erfassen der Trajektorie 1 durch Odometrie ausgehend von der definierten Initialposition 2. Die Erfassungseinrichtung beziehungsweise die Vorrichtung beziehungsweise das Fahrzeug 7 werden ausgehend von der absoluten Initialposition entlang der Trajektorie 1 bewegt.

Darüber hinaus besitzt die Vorrichtung beziehungsweise das Fahrzeug 7 eine Detektionseinrichtung 9 zum Detektieren. Dabei befindet sich die Detektionseinrichtung 9, d.h. die Vorrichtung beziehungsweise das Fahrzeug 7, auf der Trajektorie. Bei jedem Detektieren wird ein Detektionsstrahl 3 erfasst. In Fig. 5 ist die Detektionseinrichtung 9 als Kamera am Außenspiegel 14 symbolisiert.

Zudem besitzt die Vorrichtung beziehungsweise das Fahrzeug 7 eine Abgleichseinrichtung 10 zum Abgleichen der erfassten Trajektorie 2 einschließlich der erfassten Detektionsstrahlen 3 mit einer digitalen Karte 4, in der die drei Objekte O1, O2, O3 mit ihren jeweiligen absoluten Positionen repräsentiert sind, zur Ermittlung einer Lage der definierten Initialposition 2 relativ zu den Objekten O1, O2, O3.

Ferner verfügt die Vorrichtung beziehungsweise das Fahrzeug 7 über eine Ermittlungseinrichtung 12 zum Ermitteln der absoluten Initialposition basierend auf der Lage der definierten Initialposition relativ zu den Objekten. Schließlich besitzt die Vorrichtung beziehungsweise das Fahrzeug 7 auch eine Verarbeitungseinrichtung 13 zum Ermitteln einer (aktuellen) Eigenposition oder Eigenpose des Fahrzeugs basierend auf der ermittelten absoluten Initialposition beziehungsweise Initialpose und gegebenenfalls weiterer Odometriedaten beziehungsweise anderer Detektordaten.

Wie die oben dargestellten Ausführungsbeispiele zeigen, ist im Rahmen der Erfindung eine Kombination von Relativnavigation (Odometrie), Objektdetektion (Landmarkenextraktion) und Triangulation beziehungsweise Trilateration (z.B. generalisiertes PnP-Verfahren) zur Schätzung einer Fahrzeugpose möglich. Insbesondere werden hierzu die während einer Fahrt zu verschiedenen Zeiten detektierten Objekte als Objekte einer einzelnen virtuellen generalisierten Kamera in Initialpose beziehungsweise an der Initialposition interpretiert.

Speziell kann so ein entsprechendes Fahrzeug mit einem System von Surround-View-Kameras und Fahrzeugodometrie bereitgestellt werden. Außerdem ist hiermit eine Relativnavigation mittels eines SLAM-Verfahrens sowie eine Skalenschätzung über die Fahrzeugodometrie möglich. Dabei können speziell AR-Marker als eindeutige Landmarken genutzt werden.

Als Objekte beziehungsweise Landmarken können eindeutig zuordenbare Landmarken wie Nummern von Parkbuchten, aber auch weniger eindeutige Landmarken wie Verkehrsschilder genutzt werden. Letztere erfordern unter Umständen ein nachgelagertes Verfahren zur Elimination von Fehlzuordnungen. In besonders vorteilhafter Weise können Einzelsichtungen von Objekten beziehungsweise Landmarken und Sichtungen der Landmarken zu verschiedenen Zeiten verwendet werden. Fehleranfällige 3D-Rekonstruktionen sind hingegen nicht notwendig.

### Bezugszeichenliste

- 1: Trajektorie
- 2: Initialposition
- 3: Detektionsstrahl
- 4: digitale Karte
- 6: generalisierte Kamera
- 7: Fahrzeug
- 8: Erfassungseinrichtung
- 9: Detektionseinrichtung
- 10: Abgleichseinrichtung
- 12: Ermittlungseinrichtung
- 13: Verarbeitungseinrichtung
- 14: Außenspiegel
- O1: Objekt
- O2: Objekt
- O3: Objekt
- P1: Punkt
- P2: Punkt
- P3: Punkt
- P4: Punkt
- P5: Punkt
- P6: Punkt
- S1: Schritt
- S2: Schritt
- S3: Schritt
- S4: Schritt
- S5: Schritt
- S6: Schritt

## Patentansprüche

1. Verfahren zum Ermitteln einer absoluten Initialposition eines Fahrzeugs (7), wobei das Verfahren die folgenden Schritte umfasst:
- Bewegen (S1) des Fahrzeugs (7) ausgehend von der absoluten Initialposition entlang einer Trajektorie,
- Erfassen (S2) der Trajektorie (1) durch Odometrie ausgehend von einer definierten Initialposition (2), die der absoluten Initialposition (2) zugeordnet ist,
- Detektieren (S3) von drei Objekten (O1, O2, O3) von dem Fahrzeug (7) aus, das sich auf der Trajektorie (1) befindet, wobei bei jedem Detektieren ein Detektionsstrahl (3) erfasst wird,
- Abgleichen (S4) der erfassten Trajektorie (1) einschließlich der erfassten Detektionsstrahlen (3) mit einer digitalen Karte (4), in der die drei Objekte (O1, O2, O3) mit ihren jeweiligen absoluten Positionen repräsentiert sind, zur Ermittlung einer Lage der definierten Initialposition (2) relativ zu den Objekten (O1, O2, O3), wobei das Abgleichen ein generalisiertes PnP-Verfahren beinhaltet, bei dem sich die Detektionsstrahlen nicht schneiden, und
- Ermitteln (S5) der absoluten Initialposition basierend auf der Lage der definierten Initialposition (2) relativ zu den Objekten.

2. Verfahren nach Anspruch 1, wobei zu der absoluten Initialposition des Fahrzeugs (7) auch eine dazugehörige Ausrichtung aus dem Abgleichen gewonnen wird.

3. Verfahren nach Anspruch 1 oder 2, wobei die Odometrie eine optische Odometrie, eine Radarodometrie oder eine Radodometrie ist.

4. Verfahren nach einem der vorhergehenden Ansprüche, wobei mindestens eines der Objekte mehrfach detektiert wird.

5. Verfahren nach einem der vorhergehenden Ansprüche, wobei das Detektieren der drei Objekte (O1, O2, O3) durch optische Detektion, Radardetektion und/oder Ultraschalldetektion erfolgt.

6. Verfahren nach einem der vorhergehenden Ansprüche, wobei das Abgleichen ein generalisiertes P3P-Verfahren beinhaltet.

7. Verfahren zum Ermitteln (S6) einer Eigenposition eines Fahrzeugs (7) durch Ermitteln einer absoluten Initialposition (2) des Fahrzeugs (7) nach einem der vorhergehenden Ansprüche, und Gewinnen der Eigenposition ausgehend von der Initialposition (2) durch Odometrie und/oder durch kamerabasierte Lokalisierung.

8. Vorrichtung zum Ermitteln einer absoluten Initialposition eines Fahrzeugs (7) mit:
- einer Erfassungseinrichtung (8) zum Erfassen einer Trajektorie (1) durch Odometrie ausgehend von einer definierten Initialposition (2), wobei die Erfassungseinrichtung (8) ausgehend von der absoluten Initialposition entlang der Trajektorie (1) bewegbar ist,
- einer Detektionseinrichtung (9) zum Detektieren von drei Objekten (O1, O2, O3) von der Detektionseinrichtung aus, die sich auf der Trajektorie (1) befindet, wobei bei jedem Detektieren ein Detektionsstrahl erfasst wird,
- einer Abgleichseinrichtung (10) zum Abgleichen der erfassten Trajektorie (1) einschließlich der erfassten Detektionsstrahlen (3) mit einer digitalen Karte (4), in der die drei Objekte (O1, O2, O3) mit ihren jeweiligen absoluten Positionen repräsentiert sind, zur Ermittlung einer Lage der definierten Initialposition (2) relativ zu den Objekten (O1, O2, O3), wobei das Abgleichen ein generalisiertes PnP-Verfahren beinhaltet, bei dem sich die Detektionsstrahlen nicht schneiden, und
- einer Ermittlungseinrichtung (12) zum Ermitteln der absoluten Initialposition basierend auf der Lage der definierten Initialposition (2) relativ zu den Objekten (O1, O2, O3).

9. Fahrzeug (7) mit einer Vorrichtung nach Anspruch 8.

## Claims

1. A method for determining an absolute initial position of a vehicle (7), wherein the method comprises the following steps:
- moving (S1) the vehicle (7) along a trajectory starting from the absolute initial position,
- capturing (S2) the trajectory (1) by odometry starting from a defined initial position (2), which is associated with the absolute initial position (2),
- detecting (S3) three objects (O1, 02, 03) from the vehicle (7), which is located on the trajectory (1), wherein a detection beam (3) is captured upon each detection,
- matching (S4) the captured trajectory (1) including the captured detection beams (3) with a digital map (4), in which the three objects (O1, 02, 03) are represented with their respective absolute positions, for determining a pose of the defined initial position (2) in relation to the objects (O1, 02, O3),
wherein matching includes a generalized PnP method, in which the detection beams do not intersect each other, and
- determining (S5) the absolute initial position based on the pose of the defined initial position (2) in relation to the objects.

2. The method according to claim 1, wherein an associated orientation to the absolute initial position of the vehicle (7) is also obtained from matching.

3. The method according to claim 1 or 2, wherein the odometry is optical odometry, radar odometry or wheel odometry.

4. The method according to any one of the preceding claims, wherein at least one of the objects is detected multiple times.

5. The method according to any one of the preceding claims, wherein the detection of the three objects (O1, 02, O3) is effected by optical detection, radar detection and/or ultrasonic detection.

6. The method according to any one of the preceding claims, wherein matching includes a generalized P3P method.

7. A method for determining (S6) an own position of a vehicle (7) by determining an absolute initial position (2) of the vehicle (2) according to any one of the preceding claims, and obtaining the own position starting from the initial position (2) by odometry and/or by camera-based localization.

8. An apparatus for determining an absolute initial position of a vehicle (7), comprising:
- a capturing device (8) for capturing a trajectory (1) by odometry starting from a defined initial position (2), wherein the capturing device (8) is movable along the trajectory (1) starting from the absolute initial position,
- a detection device (9) for detecting three objects (O1, 02, O3) from the detection device, which is located on the trajectory (1), wherein a detection beam is captured upon each detection,
- a matching device (10) for matching the captured trajectory (1) including the captured detection beams (3) with a digital map (4), in which the three objects (O1, 02, 03) are represented with their respective absolute positions, for determining a pose of the defined initial position (2) in relation to the objects (O1, 02, O3), wherein matching includes a generalized PnP method, in which the detection beams do not intersect each other, and
- a determining device (12) for determining the absolute initial position based on the pose of the defined initial position (2) in relation to the objects (O1, 02, 03).

9. A vehicle (7) with an apparatus according to claim 8.

## Revendications

1. Procédé de détermination d'une position initiale absolue d'un véhicule (7), le procédé comprenant les étapes suivantes :
- déplacement (S1) du véhicule (7) à partir de la position initiale absolue le long d'une trajectoire,
- acquisition (S2) de la trajectoire (1) par odométrie à partir d'une position initiale définie (2), qui est associée à la position initiale absolue (2),
- détection (S3) de trois objets (O1, O2, O3) depuis le véhicule (7) qui se trouve sur la trajectoire (1), un faisceau de détection (3) étant acquis lors de chaque détection,
- comparaison (S4) de la trajectoire acquise (1), y compris les faisceaux de détection acquis (3), avec une carte numérique (4) dans laquelle les trois objets (O1, O2, O3) sont représentés avec leurs positions absolues respectives, pour déterminer un emplacement de la position initiale définie (2) par rapport aux objets (O1, O2, O3), la comparaison comprenant un procédé PnP généralisé dans lequel les faisceaux de détection ne se croisent pas, et
- détermination (S5) de la position initiale absolue sur la base de l'emplacement de la position initiale définie (2) par rapport aux objets.

2. Procédé selon la revendication 1, dans lequel une orientation correspondante par rapport à la position initiale absolue du véhicule (7) est également obtenue à partir de la comparaison.

3. Procédé selon la revendication 1 ou 2, dans lequel l'odométrie est une odométrie optique, une odométrie radar ou une odométrie de roue.

4. Procédé selon l'une quelconque des revendications précédentes, dans lequel au moins l'un des objets est détecté plusieurs fois.

5. Procédé selon l'une quelconque des revendications précédentes, dans lequel la détection des trois objets (O1, O2, O3) est effectuée par détection optique, détection radar et/ou détection ultrasonore.

6. Procédé selon l'une quelconque des revendications précédentes, dans lequel la comparaison comprend un procédé P3P généralisé.

7. Procédé de détermination (S6) d'une position propre d'un véhicule (7) par détermination d'une position initiale absolue (2) du véhicule (7) selon l'une quelconque des revendications précédentes, et obtention de la position propre à partir de la position initiale (2) par odométrie et/ou par localisation à base de caméra.

8. Dispositif de détermination d'une position initiale absolue d'un véhicule (7) comprenant :
- un équipement d'acquisition (8) pour acquérir une trajectoire (1) par odométrie à partir d'une position initiale définie (2), l'équipement d'acquisition (8) étant mobile à partir de la position initiale absolue le long de la trajectoire (1),
- un équipement de détection (9) pour détecter trois objets (O1, O2, O3) depuis l'équipement de détection qui se trouve sur la trajectoire (1), un faisceau de détection étant acquis lors de chaque détection,
- un équipement de comparaison (10) pour comparer la trajectoire acquise (1), y compris les faisceaux de détection acquis (3), avec une carte numérique (4) dans laquelle les trois objets (O1, O2, O3) sont représentés avec leurs positions absolues respectives, pour déterminer un emplacement de la position initiale définie (2) par rapport aux objets (O1, O2, O3), la comparaison comprenant un procédé PnP généralisé dans lequel les faisceaux de détection ne se croisent pas, et
- un équipement de détermination (12) pour déterminer la position initiale absolue sur la base de l'emplacement de la position initiale définie (2) par rapport aux objets (O1, O2, O3).

9. Véhicule (7) comportant un dispositif selon la revendication 8.
